# EUROPÄISCHE PATENTSCHRIFT

(11) **EP 2 529 995 B1**
(45) Veröffentlichungstag und Bekanntmachung des Hinweises auf die Patenterteilung: **16.11.2016**
(21) Anmeldenummer: 12169137.2
(22) Anmeldetag: 23.05.2012
(51) Int. Cl.: B62B 3/14, A47F 9/04, G07G 3/00, G01V 8/10, G08B 13/14

(54) **Transportwagen**
Transport trolley
Chariot de transport

(30) Priorität: 30.05.2011 DE 102011103588
(43) Veröffentlichungstag der Anmeldung: 05.12.2012
(73) Patentinhaber: Wanzl Metallwarenfabrik GmbH, 89340 Leipheim (DE)
(72) Erfinder: Acikgöz, Ayhan, 89312 Günzburg (DE); Zimmermann, Marco, 89407 Dillingen (DE)

(56) Entgegenhaltungen:
- EP-A1- 0 175 885
- EP-B1- 0 905 004
- WO-A1-87/04833
- DE-A1-102006 027 389
- DE-C1- 19 614 872
- DE-U1- 9 312 909
- US-A- 4 465 290
- US-A1- 2008 074 261

## Beschreibung

Die Erfindung betrifft einen stapelbaren Transportwagen mit den Merkmalen im Oberbegriff des Hauptanspruchs sowie ein System zum Detektieren einer geöffneten Warenablage gemäß Anspruch 10.

Stapelbare Transportwagen sind aus dem Stand der Technik bekannt. In SB-Geschäften werden sie zum Transport von Waren eingesetzt. Ein solcher ist beispielsweise in dem EP 0 905 004 B1 beschrieben. Er weist ein Fahrgestell auf, an dem Rollen angeordnet sind und das einen Korb trägt. An dem Korb ist ein Schiebegriff angeordnet. Im hinteren unteren Bereich ist eine zusätzliche Warenablage vorgesehen, die von einer Nichtgebrauchslage in eine Gebrauchslage bewegbar ist und z.B. mit einer Getränkekiste oder Sechs-Pack-Gebinden beladen werden kann.

Ferner sind Reflexionslichtschranken, z.B. aus der DE 28 24 583 A1, bekannt, bei denen polarisiertes Licht verwendet wird, das durch einen Überwachungsbereich auf einen Retroreflektor geschickt wird, der die Polarisationsrichtung verändert, z.B. dreht. Durch die polarisationsdrehende Eigenschaft des verwendeten Retroreflektors, z.B. in Form einer ReflektorFolie, tritt trotz der Abweichung der Polarisationsrichtungen des Sendelichtes und des vor dem Empfänger angeordneten Polarisators ein messbares Signal auf, das z.B. in ein akustisches Signal umgewandelt werden kann.

Tritt in den Überwachungsbereich, z.B. einen Kassenbereich eines Supermarktes, ein stark reflektierendes Objekt, wie beispielsweise ein Transportwagen mit einem metallischen Fahrgestell, so ändert sich in der Regel der Polarisationszustand des davon reflektierten Lichtes nicht. An dem Empfänger wird entsprechend kein Signal gemessen.

Die Aufgabe der vorliegenden Erfindung besteht darin, einen stapelbaren Transportwagen zu beschreiben, der mit einem Reflektor ausgestattet ist und ein Signal an einen Empfänger übermittelt, der beispielsweise im Bereich der Kasse angeordnet ist und somit die an der Kasse sitzende Person darüber informiert, dass die untere Warenablage geöffnet ist.

Die Erfindung löst die Aufgabe mit den Merkmalen im Hauptanspruch und in Anspruch 10.

Weitere vorteilhafte Ausführungen sind in den Unteransprüchen beschrieben.

Das bereits vorhandene Bauteil zur Aufnahme der Warenablage zwischen Fahrgestell und Rollen kann jeweils zur Aufnahme eines Reflektors verwendet werden.

Auch das Nachrüsten von Transportwagen ist in vorteilhafter Weise möglich, da das zusätzliche Teil zur Aufnahme des Reflektors lediglich auf das bereits vorhandene Bauteil zwischen Fahrgestell und Rollen geklebt wird.

Da das zusätzliche Bauteil sehr kostengünstig aus Kunststoff gespritzt oder aus Blech gestanzt werden kann, und zudem der Reflektor als handelsübliche Folie bezogen und auf das zusätzliche Bauteil geklebt werden kann, stellt sowohl das Ausrüsten als auch das Nachrüsten der Transportwagen mit einem solchen Sicherungssystem eine günstige Angelegenheit dar.

Die Erfindung wird anhand verschiedener Ausführungsbeispiele näher erläutert. Es zeigt
- Fig. 1: einen Teil eines Transportwagens in 3-D-Ansicht mit einer Warenablage in Nichtgebrauchslage;
- Fig. 2: einen Teil eines Transportwagens in 3-D-Ansicht mit einer Warenablage in Gebrauchslage;
- Fig. 3: den gleichen Teil eines Transportwagens in Seitenansicht mit einer Warenablage in Nichtgebrauchslage;
- Fig. 4: den gleichen Teil eines Transportwagens in Seitenansicht mit einer Warenablage in Gebrauchslage;
- Fig. 5: ein Bauteil, zur Aufnahme der Warenablage, in Gebrauchslage mit Reflektor, in Seitenansicht;
- Fig. 6: dasselbe Bauteil zur Aufnahme der Warenablage, in Nichtgebrauchslage, in Seitenansicht;
- Fig. 7: eine Schutzvorrichtung in Seitenansicht;
- Fig. 8: ein Befestigungsmittel sowie
- Fig. 8a - c: verschiedene Ansichten des Befestigungsmittels.

Die Erfindung betrifft einen stapelbaren Transportwagen 1 mit einem Fahrgestell 2. Der Transportwagen 1, insbesondere das Fahrgestell 2, ist mit Rollen 3 ausgestattet. Ferner trägt das Fahrgestell 2 einen Korb, wobei an dem Korb ein Schiebegriff angeordnet ist. Darüber hinaus ist das Fahrgestell 2 mit einer Warenablage 4 ausgestattet, die von einer Nichtgebrauchslage in eine Gebrauchslage bewegbar ist.

Insbesondere ist der Reflektor 5 an jedem Bauteil 6 angeordnet, das zur Aufnahme der Warenablage 4 vorgesehen ist. Dieses Bauteil 6 ist als Verbindungsteil zwischen den hinteren Rollen 3 und dem Fahrgestell 2 vorgesehen und dient gleichzeitig zur Aufnahme der Warenablage 4. Da ausreichend Fläche durch dieses Bauteil 6 gegeben ist, bietet es sich an, diesen Bereich für die Aufnahme eines zusätzlichen Teiles 7 zu verwenden. Dieses zusätzliche Teil 7 wird auf das Bauteil 6 ortsfest an der Außenseite angebracht. Insbesondere wird das zusätzliche Teil 7 auf das Bauteil 6 geklebt. Das zusätzliche Teil 7 ist vorzugsweise aus Blech oder einem Kunststoff gebildet.

Der Reflektor 5 wird als Reflektorfolie, vorzugsweise als so genannte Retroreflektorfolie, auf das zusätzliche Teil 7 geklebt. Dieser Vorgang ist vorzugsweise vor dem Anordnen an das Bauteil 6 des Wagens 1 vorzunehmen.

Wenn nun ein Transportwagen 1 durch einen bestimmten Bereich, z.B. einen Kassenbereich, gefahren wird und die Warenablage 4 sich in Gebrauchsposition befindet, kann mittels einer Lichtschranke, die vorzugsweise einen polarisierten Lichtstrahl aussendet, der Reflektor 5 diesen Lichtstrahl reflektieren. Bei Verwendung eines Retroreflektors 5 wird die Polarisierungsrichtung verändert und kann von dem in der Lichtschranke integrierten Empfänger in veränderter Weise empfangen werden, was ein Signal, z.B. ein akustisches oder ein visuelles Signal, an der Kasse auslöst, so dass die an der Kasse arbeitende Person darüber informiert wird, dass sich die Warenablage 4 in Gebrauchslage befindet und dort ggf. Waren abgelegt sind, die ohne bezahlt zu werden durch den Kassenbereich geschoben werden.

Ferner kann der Lichtstrahl auch von Metallteilen des Transportwagens 1 z.B. des Fahrgestells 2 reflektiert werden. Hierbei ändert sich aber der Polarisierungszustand des davon reflektierten Lichtes nicht. Somit wird auch kein Signal ausgelöst.

Es handelt sich somit um ein System zum Detektieren einer geöffneten Warenablage 4, wobei eine Lichtschranke mit einem integrierten Empfänger einen polarisierten Lichtstrahl aussendet, der von dem Reflektor 5, der an einem Bauteil 6 angeordnet ist, reflektiert wird. Hierbei ändert der Lichtstrahl seine Polarisation. Der veränderte Lichtstrahl wird dann von dem Empfänger aufgenommen und ein Signal wird ausgelöst.

In einer alternativen Variante findet ein anderer Reflektor 5 und insbesondere kein Retroreflektor 5 Einsatz.

In Nichtgebrauchslage der Warenablage 4 ist, damit es nicht zu unnötigen Störungen kommt, eine Schutzvorrichtung 8 vorgesehen, die in der Nichtgebrauchslage den Reflektor 5 verdeckt. Diese Schutzvorrichtung 8 ist beweglich angeordnet, so dass diese den Reflektor 5 nur in Gebrauchslage der Warenablage 4 freigibt.

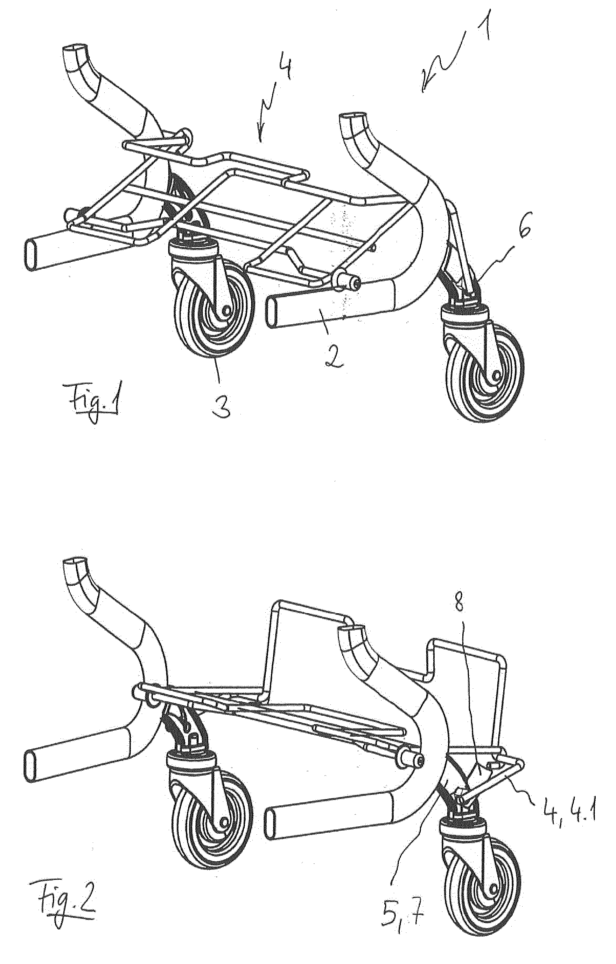

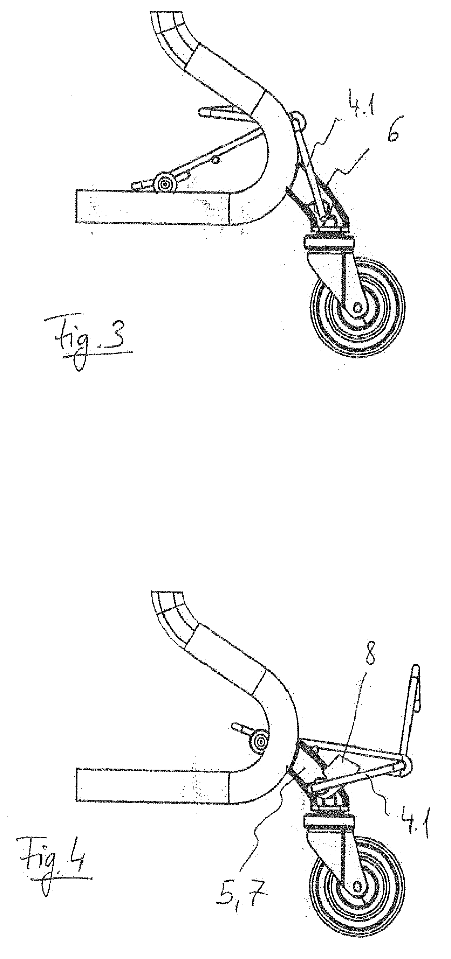

Die Figuren 1 und 3 zeigen ausschnittsweise einen Transportwagen 1, der in seinem hinteren Bereich eine Warenablage 4 in Nichtgebrauchslage aufweist. In beiden Darstellungen ist der Reflektor 5 mit einer Schutzvorrichtung 8 verdeckt.

Die Figuren 2 und 4 zeigen den gleichen Ausschnitt eines Transportwagens 1 mit einer Warenablage 4 in Gebrauchslage. Die Schutzvorrichtungen 8, die vorzugsweise an beiden Seiten auf dem zusätzlichen Teil 7 angebracht sind, geben den Reflektor 5 frei, der auf dem zusätzlichen Bauteil 7 angeordnet ist.

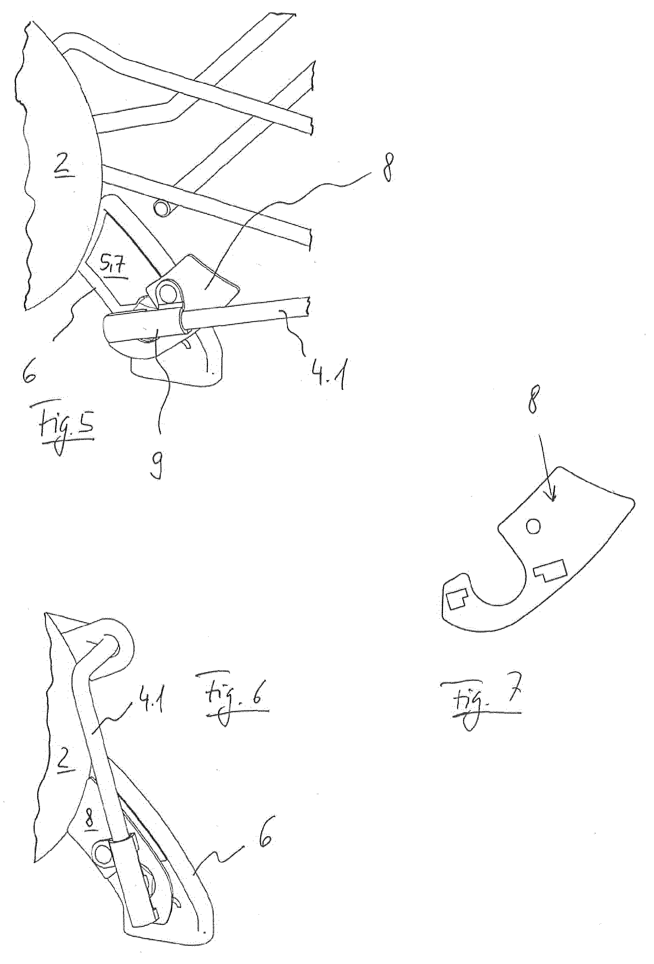

Die Schutzvorrichtung 8 ist mittels eines Befestigungsmittels 9 jeweils an einem der beiden Schwenkteile 4.1 der Warenablage 4 angeordnet. Figur 7 zeigt eine Schutzvorrichtung 8 in Seitenansicht. Diese ist vorzugsweise aus einem Kunststoff gebildet. Die Schutzvorrichtung 8 ist vorzugsweise größer ausgeführt als das zusätzliche Teil 7. Der Drehpunkt, der für die Schwenkteile 4.1. der Warenablage 4 vorgesehen ist, kann gleichzeitig auch als Drehpunkt für die Schutzvorrichtung 8 verwendet werden.

Die Figuren 5 und 6 zeigen in vergrößerter Darstellung ein Bauteil 6, das mit einem zusätzlichen Teil 7 versehen ist, welches einen Reflektor 5 aufweist. Figur 5 zeigt die Warenablage 4 in Gebrauchslage. Die Schutzvorrichtung 8 gibt den Reflektor 5 frei. In Figur 6 demgegenüber ist die Warenablage 4 in Nichtgebrauchslage dargestellt und der Reflektor 5 mittels der Schutzvorrichtung 8 verdeckt.

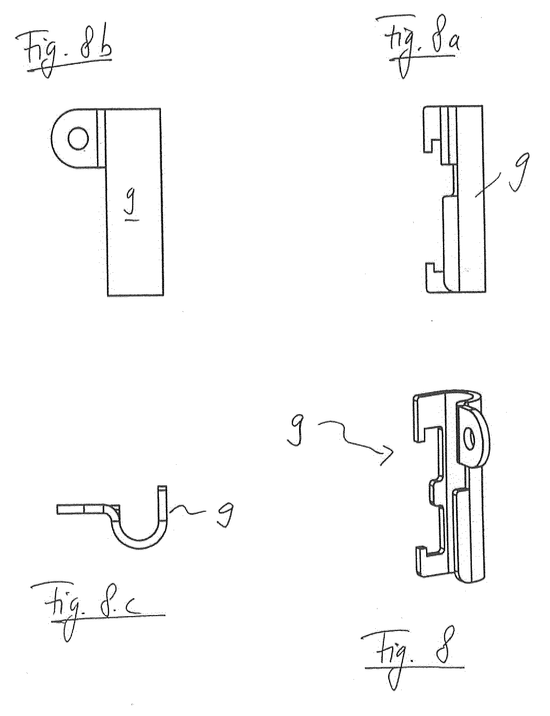

Die Figuren 8, 8a, 8b und 8c zeigen ein Befestigungsmittel 9 mit dem die Schutzvorrichtung 8 an dem Schwenkteil 4.1. der Warenablage 4 angebracht ist. Es bietet sich an, dieses Befestigungsmittel 9 entweder mittels Nieten oder einer Schweißverbindung anzuordnen.

Ferner kann die Schutzvorrichtung 8 Öffnungen aufweisen, in die die herausragenden Ärmchen des Befestigungsmittels 9 eingebracht werden können.

### Bezugszeichenliste

- 1: Transportwagen, Wagen
- 2: Fahrgestell
- 3: Rolle
- 4: Warenablage
- 4.1: Schwenkteil
- 5: Reflektor
- 6: Bauteil
- 7: zusätzliches Teil
- 8: Schutzvorrichtung
- 9: Befestigungsmittel

## Patentansprüche

1. Stapelbarer Transportwagen mit einem Fahrgestell (2), das mit Rollen (3) ausgestattet ist und einen Korb trägt, wobei an dem Korb ein Schiebegriff angeordnet ist und ferner das Fahrgestell (2) mit einer Warenablage (4) ausgestattet ist, die von einer Nichtgebrauchslage in eine Gebrauchslage bewegbar ist, **dadurch gekennzeichnet, dass** ein Reflektor (5) an jenem Bauteil (6) angebracht ist, das zur Aufnahme der Warenablage (4) vorgesehen ist, wobei das Bauteil (6) ein zusätzliches Teil (7) aufnimmt, das ortsfest angebracht ist, und wobei ferner der Reflektor (5) als so genannte Reflektorfolie auf das zusätzliche Teil (7) geklebt ist.

2. Stapelbarer Transportwagen nach Anspruch 1, **dadurch gekennzeichnet, dass** das zusätzliche Teil (7) auf das Bauteil (6) geklebt ist.

3. Stapelbarer Transportwagen nach Anspruch 1 oder 2, **dadurch gekennzeichnet, dass** das zusätzliche Teil (7) aus Blech oder Kunststoff gebildet ist.

4. Stapelbarer Transportwagen nach einem der vorhergehenden Ansprüche, **dadurch gekennzeichnet, dass** eine Schutzvorrichtung (8) vorgesehen ist, die in der Gebrauchslage der Warenablage (4) den Reflektor (5) freigibt und in Nichtgebrauchslage den Reflektor (5) verdeckt.

5. Stapelbarer Transportwagen nach Anspruch 4, **dadurch gekennzeichnet, dass** die Schutzvorrichtung (8) ortsfest mittels eines Befestigungsmittels (9) an der Warenablage (4) angeordnet ist.

6. Stapelbarer Transportwagen nach Anspruch 4 oder 5, **dadurch gekennzeichnet, dass** die Schutzvorrichtung (8) an einem der beiden Schwenkteile (4.1) der Warenablage (4) angebracht ist.

7. Stapelbarer Transportwagen nach einem der Ansprüche 4 bis 6, **dadurch gekennzeichnet, dass** die Schutzvorrichtung (8) mittels Nieten angebracht ist oder mittels einer Schweißverbindung angeordnet ist.

8. System zum Detektieren einer geöffneten Warenablage (4) wobei eine Lichtschranke mit einem integrierten Empfänger einen polarisierten Lichtstrahl aussendet, der von dem Reflektor (5), der an einem Bauteil (6) eines Transportwagens gemäß Anspruch 1 angeordnet ist, reflektiert wird, und wobei der Lichtstrahl seine Polarisation ändert und der veränderte Lichtstrahl dann von dem Empfänger aufgenommen wird und ein Signal ausgelöst wird.

## Claims

1. A nestable trolley having a wheel frame (2) which is equipped with casters (3) and which bears a basket, wherein a pushing handle is arranged on the basket and furthermore the wheel frame (2) is equipped with a goods rack (4) movable from a position of non-use into a position of use, **characterised in that** a reflector (5) is attached to that component (6) which is provided to receive the goods rack (4), wherein the component (6) receives an additional part (7) which is attached in a fixed manner, and wherein furthermore the reflector (5) is stuck onto the additional part (7) as what is known as a reflective sheet.

2. A nestable trolley according to claim 1, **characterised in that** the additional part (7) is stuck onto the component (6).

3. A nestable trolley according to claim 1 or 2, **characterised in that** the additional part (7) is formed from sheet metal or plastics material.

4. A nestable trolley according to any one of the preceding claims, **characterised in that** a protective device (8) is provided which frees the reflector (5) in the position of use of the goods rack (4) and covers the reflector (5) in the position of non-use of the goods rack (4).

5. A nestable trolley according to claim 4, **characterised in that** the protective device (8) is fixedly arranged on the goods rack (4) by means of a securing means (9).

6. A stackable trolley according to claim 4 or 5, **characterised in that** the protective device (8) is attached to one of the two pivot parts (4.1) of the goods rack (4).

7. A nestable trolley according to any one of claims 4 to 6, **characterised in that** the protective device (8) is attached by means of rivets or is arranged by means of a weld.

8. A system for detecting an opened-out goods rack (4), wherein a light barrier with an integrated receiver emits a polarized light beam which is reflected by the reflector (5) which is arranged on a component (6) of a trolley according to claim 1, and wherein the light beam alters its polarization and the altered light beam is then received by the receiver and a signal is triggered.

## Revendications

1. Chariot de transport emboîtable muni d'un châssis de roulement (2) équipé de roulettes (3) et portant un panier, une poignée de poussée étant disposée sur ledit panier, et ledit châssis de roulement (2) étant par ailleurs pourvu d'une tablette (4) porte-marchandises pouvant être mue d'une position de non-utilisation à une position d'utilisation, **caractérisé par le fait qu'**un réflecteur (5) est installé sur l'élément structurel (6) prévu pour recevoir la tablette (4) porte-marchandises, ledit élément structurel (6) recevant une partie additionnelle (7) à montage fixe, et ledit réflecteur (5) étant en outre collé sur ladite partie additionnelle (7), en tant que "feuille réfléchissante".

2. Chariot de transport emboîtable selon la revendication 1, **caractérisé par le fait que** la partie additionnelle (7) est collée sur l'élément structurel (6).

3. Chariot de transport emboîtable selon la revendication 1 ou 2, **caractérisé par le fait que** la partie additionnelle (7) consiste en de la tôle ou en une matière plastique.

4. Chariot de transport emboîtable selon l'une des revendications précédentes, **caractérisé par** la présence d'un dispositif de protection (8) qui laisse apparaître le réflecteur (5) dans la position d'utilisation de la tablette (4) porte-marchandises, et occulte ledit réflecteur (5) en position de non-utilisation.

5. Chariot de transport emboîtable selon la revendication 4, **caractérisé par le fait que** le dispositif de protection (8) est implanté de manière fixe sur la tablette (4) porte-marchandises, à l'aide d'un moyen de fixation (9).

6. Chariot de transport emboîtable selon la revendication 4 ou 5, **caractérisé par le fait que** le dispositif de protection (8) est installé sur l'une des deux parties pivotantes (4.1) de la tablette (4) porte-marchandises.

7. Chariot de transport emboîtable selon l'une des revendications 4 à 6, **caractérisé par le fait que** le dispositif de protection (8) est installé au moyen de rivets, ou implanté au moyen d'une liaison soudée.

8. Système de détection d'une tablette (4) porte-marchandises à l'état ouvert, une barrière photoélectrique, à récepteur intégré, émettant un rayon lumineux polarisé qui est réfléchi par le réflecteur (5) installé sur un élément structurel (6) d'un chariot de transport conforme à la revendication 1, sachant que ledit rayon lumineux modifie sa polarisation, que le rayon lumineux modifié est ensuite saisi par ledit récepteur, et qu'un signal est déclenché.
